Europäisches Patentamt

European Patent Office

Office européen des brevets

(19)

(11) Publication number: **0 038 391**
**B1**

(12) **EUROPEAN PATENT SPECIFICATION**

(45) Date of publication of patent specification: **25.07.84**

(21) Application number: **80301302.8**

(22) Date of filing: **23.04.80**

(51) Int. Cl.³: **B 23 Q 35/123,**
**G 05 B 19/18**

(54) Tracer control equipment.

(43) Date of publication of application:
**28.10.81 Bulletin 81/43**

(45) Publication of the grant of the patent:
**25.07.84 Bulletin 84/30**

(84) Designated Contracting States:
**DE FR GB**

(56) References cited:
**DE - A - 2 319 963**
**GB - A - 2 002 546**
**GB - A - 2 017 344**
**US - A - 4 131 838**
**US - A - 4 143 310**
**US - A - 4 153 863**

(73) Proprietor: **FANUC LTD**
**5-1, Asahigaoka 3-chome Hino-shi**
**Tokyo 191 (JP)**

(72) Inventor: **Imazeki, Ryoji**
**No. 987-44, Naganuma-cho**
**Hachioji-shi Tokyo (JP)**
Inventor: **Yamazaki, Etuo**
**No. 566-93, Shimoongata-cho**
**Hachioji-shi Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

## Description

This invention relates to tracer control equipment.

Tracer controlled machining may in some cases require relatively simple numerical control, for positioning for example, using a numerical command according to a workpiece being machined. A method that has been employed in the past to meet such a requirement is to combine tracer control equipment with numerical control equipment, to share a motor drive circuit and to perform selectively numerical control and tracer control by switching appropriate commands to the motor drive circuit for each particular operation to be effected. With this method, however, during tracer control the expensive numerical control equipment is completely unused, and both tracer control and numerical control equipments provide facilities for jog feed, rapid feed, handle feed and so forth; so that this method is very wasteful in many respects.

GB—A—2 017 344 describes tracer apparatus having a tracer head for tracing the surface of a model and a cutter for machining a workpiece to produce a copy of the model. The tracer apparatus has means for calculating trace direction and trace velocity for tracing control using displacement signals from the tracer head and a predetermined desired composite displacement signal. The tracer apparatus has a memory for holding data defining a tracing operation, and a processor for reading out tracing operation defining data stored in the memory to determine a desired tracing path. The apparatus has position detectors coupled with respective servo motors, driven by respective amplifiers, for providing motion along respective movement axes. The position detectors provide output pulses which are counted by respective reversible counters to indicate current tracer head position. Attainment of a desired tracer control position (e.g. an automatic return position) is determined when a relevant counter content becomes equal to a value stored in the memory. An analog gate circuit delivers command speed signals selectively to the amplifiers. Digital-analog converters are provided for converting data read from the memory.

US—A—4 131 838 discloses a displacement amount detecting device in relation to which a numerical controller supplies a train of distribution pulses whose number and frequency correspond respectively to feed amount and feed rate information contained in numerical control data. These pulses are supplied to a deviation counter, which is an up-down counter which calculates the difference between the distribution pulses and feedback pulses provided by the displacement amount detecting device. A digital to analog converter converts the calculated difference to an analog signal which is sent to a drive device which drives a servo motor at a speed corresponding to the difference.

According to the present invention there is provided tracer control equipment, including means operable to derive a trace velocity command signal, for tracing control, from displacement signals, provided by a tracer head during a tracing operation for tracing the surface of a model and cutting a workpiece with a cutter, and from a predetermined composite displacement signal, means operable selectively to deliver the trace velocity command signal to servo motors for moving the tracer head and the cutter along respective movement axes, a memory for holding tracing data defining a tracing operation, a processor for reading out tracing data held in the memory for controlling a tracing path of the tracer head, a plurality of position detectors coupled with respective servo motors, and a plurality of reversible counters for counting output pulses from respective position detectors;

characterised in that the memory is employed also for holding numerical command data for numerical control of positioning and movement of the tracer head and the cutter independently of tracing control;

in that the processor is operable selectively to read out numerical command data held in the memory;

in that the tracing control equipment further includes a buffer register into which data for control of direction and velocity of movement of the tracer head and the cutter is set in accordance with numerical command data selectively read out from the memory, and a digital-to-analog converter operable to receive data set in the buffer register and to provide therefrom an analog velocity command signal;

and in that the means operable selectively to deliver the trace velocity command signal include an analog gate circuit selectively switchable so that the analog velocity command signal is delivered in place of the trace velocity command signal, and the processor is operable to read the count contents of the reversible counters for comparison with numerical command data held in the memory, thereby to provide numerical control of positioning and movement of the tracer head and the cutter.

Tracer control equipment embodying the present invention designed to perform a relatively simple numerical control function for positioning control and the like in such a way that both tracer control and such numerical control may be effected by means of an economical arrangement of the tracer control equipment alone.

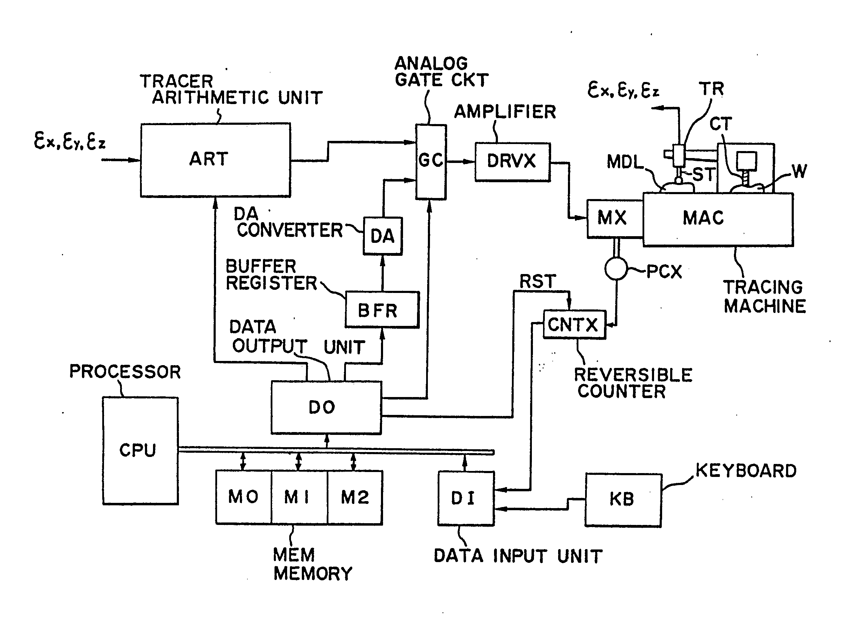

Reference is made, by way of example, to the accompanying drawing which illustrates in a schematic block diagram principal parts of equipment embodying the present invention.

In the drawing, ART is a tracer arithmetic unit including a composite displacement calculation circuit, a velocity calculation circuit and a distribution circuit, GC is an analog gate circuit; DRVX is an amplifier; MX is a servo motor; MAC is a tracing machine; MDL is a model; TR is a tracer head; ST is a stylus, CT is a cutter; W is a workpiece; PCX is a position detector; CNTX is a reversible counter for counting pulses available from the position detector; DO is a data output unit; BFR is a buffer register; DA is a D-A (digital to analog) converter; MEM is a memory having a control program memory part M0, a data memory part M1 and a work memory part M2; DI is a data input unit; KB is a keyboard; and CPU is a processor. In the drawings, only one drive axis (the X-axis, of three drive axes X, Y and Z) is illustrated (i.e. only the X-axis amplifier DRVX, the X-axis servo-motor MX, the X-axis position detector PCX and the X-axis reversible counter CNTX are shown) for convenience of description.

When the stylus ST is brought into contact with the model MDL and traces over the surface of the model, driven by the servo motor MX, the tracer head TR provides to the tracer arithmetic unit ART displacement signals $\varepsilon_x$, $\varepsilon_y$ and $\varepsilon_z$ corresponding to the displacement of the stylus ST. The tracer arithmetic unit ART derives from the displacement signals $\varepsilon_x$, $\varepsilon_y$, $\varepsilon_z$ a composite displacement signal,

$$\varepsilon = \sqrt{\varepsilon_x{}^2 + \varepsilon_y{}^2 + \varepsilon_z{}^2},$$

and displacement direction signals $\sin\theta$ and $\cos\theta$ and produces a velocity command signal based on the thus obtained signals and on a reference displacement signal $\varepsilon_0$ applied separately (not shown) from the abovesaid displacement signals $\varepsilon_x$, $\varepsilon_y$, $\varepsilon_z$. The velocity command signal thus obtained is supplied to the analog gate circuit GC. Since the analog gate circuit GC applies the velocity command signal to a selected one of the X, Y and Z axis amplifiers (of which only the X-axis amplifier is shown), corresponding respectively to the X, Y and Z drive axes, the appropriate servo motor is driven in response to the velocity command signal amplified by the selected amplifier thereby bodily to feed the cutter and the tracer head TR. These operations are well-known in the art.

Data defining a tracer operation is entered from the keyboard KB, for example, and stored in the memory MEM. The processor CPU reads out the operation defining data from the memory MEM when the tracer operation is effected and controls the tracing path in accordance with that data. For example, decisions as to whether or not the stylus ST has reached a trace turning position or a trace end position for example are checked by making a comparison between stylus position information, from the reversible counter CNTX for example, and set position information stored in the data memory part M1 of memory MEM.

In an embodiment of the present invention, in such tracer control equipment provided with a processor for controlling the tracing path and the like, there are provided buffer register BFR, for storing velocity command and like numerical command data, and D-A converter DA for converting the output from the buffer register BFR to analog form for input to the analog gate circuit GC. The buffer register BFR and the D-A converter DA are placed under the control of the central processor CPU so as to perform positioning control using the numerical command data.

For positioning control, numerical command data such as distance, direction and velocity of movement of the cutter and so forth are entered, from the keyboard KB for example, to be prestored in the data memory part M1 of the memory MEM via the data input unit DI. When the cutter CT is placed at its initial start point and a start button (not shown) depressed, the processor CPU changes over the analog gate circuit GC and, at the same time, reads out feed rate data and the data representing feed direction, stored in the memory MEM, and writes that data into the buffer register BFR via the data output unit DO. In this case, the feed direction is written in the buffer register BFR with a positive or negative sign. The output from the buffer register BFR is converted by the D-A converter into an analog signal, which is applied as a velocity command signal via the analog gate circuit GC to the amplifier DRVX. The servo motor MX is driven in correspondence with the velocity command signal to shift the cutter CT and the stylus ST. The distance of movement of the cutter CT and the stylus ST can be detected from the content of the reversible counter CNTX which counts output pulses available from the position detector PCX mounted on the servo motor MX.

The processor CPU reads out the content of the reversible counter CNTX via the data input unit DI with a constant period (the content is read repeatedly at predetermined intervals) and adds the count content of the reversible counter CNTX to the previous stored content (the content accumulated up to the last reading) and stores the sum in some area of the work memory part M2 of memory MEM. The distance of movement of the cutter CT as represented by the sum stored in the work memory M2 and the desired distance-of-movement data prestored in the data memory part M1 (fed in from the keyboard KB or the like) are read out by the processor CPU with a constant period and compared with each other (repeated comparisons are made at regular intervals). When it is determined by this comparison that the actual distance of movement of the cutter CT matches the preset desired distance, the processor CPU zeros the content of the buffer register BFR via the data output unit DO to stop servo motor operation, thus completing positioning control.

The reversible counter CNTX is reset by a reset signal RST after its content has been read out, and therefore it need have a capacity sufficient only to count output pulses from the position detector PCX over a certain period of time; thus, the reversible counter CNTX can be formed of a register of relatively small capacity.

In positioning as described above, the desired distance of movement of the cutter CT is specified in advance.

However, positioning can also be performed by increasing the capacity of the reversible counter CNTX so that its content indicates the current position of the cutter CT at all times, storing in the memory MEM data on a desired final position of the cutter CT and comparing this data with the current position data from the reversible counter CNTX by means of the processor CPU.

When carrying out, by such positioning control, what is called straight-line cutting, which involves effecting a cutting operation even whilst the cutter moves in parallel to its axial direction, the accuracy of the cutter feeding speed is also important in addition to the distance of movement of the cutter, and the cutter must be fed faithfully at a specified feed rate. However, if there is in the servo system or the like an offset of, for example, several millimeters per minute in terms of the feed rate, then the cutter may not be fed at a specified velocity; This error poses a problem especially when the feeding speed is low, for instance, five to ten-odd millimeters per minute.

Embodiments of the present invention can provide for correction of such a feed rate error as described hereunder.

After writing into the buffer register BFR feed velocity data stored in the memory MEM, to start up feeding by the servo motor MX, the processor CPU reads out the content of the reversible counter CNTX to calculate therefrom the actual velocity of movement of the cutter CT, compares the calculated cutter movement velocity with the abovementioned feed velocity data and rewrites the content of the buffer register BFR so that the two velocities may be caused to match one another. For such rewriting of the content of BFR, use can be made of feed velocity correction data prestored in the memory MEM.

As has been described above, tracer control equipment embodying the present invention is equipped with a relatively simple numerical control function through utilization of a processor controlling the tracing path and so forth. Accordingly, tracer control equipment embodying the invention is capable of effecting both tracer control and numerical control with an economical arrangement, as compared with an arrangement in which full tracer control equipment and a numerical control equipment are merely combined as has heretofore been employed.

Thus, an embodiment of the invention provides tracer control equipment in which a trace direction and a trace velocity are calculated using signals from a tracer head tracing a model surface and in which tracer control is performed in accordance with the calculation results. The equipment has a memory for storing numerical command data and means whereby a processor can read out the stored numerical command data from the memory, thereby to add a numerical control function for positioning control to the capabilities of the tracer control equipment.

## Claims

1. Tracer control equipment, including means (ART) operable to derive a trace velocity command signal, for tracing control, from displacement signals ($\varepsilon_x$, $\varepsilon_y$, $\varepsilon_z$), provided by a tracer head (TR) during a tracing operation for tracing the surface of a model (MDL) and cutting a workpiece (W) with a cutter, and from a predetermined composite displacement signal ($\varepsilon_o$), means (GC, DRVX) operable selectively to deliver the trace velocity command signal to servo motors (MX) for moving the tracer head and the cutter along respective movement axes, a memory (MEM) for holding tracing data defining a tracing operation, a processor (CPU) for reading out tracing data held in the memory for controlling a tracing path of the tracer head (TR), a plurality of position detectors (PCX) coupled with respective servo motors, and a plurality of reversible counters (CNTX) for counting output pulses from respective position detectors;

characterised in that the memory (MEM) is employed also for holding numerical command data for numerical control of positioning and movement of the tracer head (TR) and the cutter (CT) independently of tracing control;

in that the processor (CPU) is operable selectively to read out numerical command data held in the memory;

in that the tracing control equipment further includes a buffer register (BFR) into which data for control of direction and velocity of movement of the tracer head (TR) and the cutter (CT) is set in accordance with numerical command data selectively read out from the memory (MEM), and a digital-to-analog converter (DA) operable to receive data set in the buffer register (BFR) and to provide therefrom an analog velocity command signal;

and in that the means (GC, DRVX) operable selectively to deliver the trace velocity command signal, include an analog gate circuit (aC) selectively switchable so that the analog velocity command signal is delivered in place of the trace velocity command signal, and the processor (CPU) is operable to read the count contents of the reversible counters (CNTX) for comparison with numerical command data held in the memory (MEM), thereby to provide numerical control of positioning and movement of the tracer head (TR) and the cutter (CT).

2. Equipment as claimed in claim 1, wherein count contents held in the respective reversible counters (CNTX) represent incremental changes of position of the tracer head (TR) and the cutter (CT) along the respective movement axes, and wherein the processor (CPU) is operable to read the count content held in each reversible counter, add that content to an accumulated count value stored in the memory (MEM) in respect of the reversible counter concerned, and clear the reversible counter.

3. Equipment as claimed in claim 1, wherein count contents held in the reversible counters (CNTX) represent the current position of the tracer head (TR) and the cutter (CT) along the respective movement axes.

4. Equipment as claimed in claim 1, 2 or 3, wherein when the positioning and movement of the tracer head (TR) and cutter (CT) is under numerical control, the processor (CPU) is operable to read out the content of the reversible counters (CNTX) and to compute actual velocity information, and is operable when actual velocity does not correspond to desired velocity, to rewrite the content of the buffer register (BFR) in accordance with velocity correction data held as numerical command data in the memory (MEM).

**Revendications**

1. Equipement de commande de copiage, comprenant des moyens (ART) qu'on peut faire fonctionner pour élaborer un signal d'ordre de vitesse de copiage, pour la commande de copiage, à partir de signaux de déplacement ($\varepsilon_x$, $\varepsilon_y$, $\varepsilon_z$), produits par un palpeur (TR) pendant une opération de copiage, pour explorer la surface d'un modèle (MDL) et pour couper une pièce à usiner (W) avec une fraise, et à partir d'un signal de déplacement composite prédéterminé ($\varepsilon_o$), des moyens (GC, DRVX) qu'on peut faire fonctionner sélectivement pour appliquer le signal d'ordre de vitesse de copiage à des servomoteurs (MX) destinés à déplacer le palpeur et la fraise le long d'axes de mouvement respectifs, une mémoire (MEM) destinée à conserver des données de copiage définissant une opération de copiage, un processeur (CPU) destiné à lire des données de copiage conservées dans la mémoire, pour commander un chemin de copiage du palpeur (TR), un ensemble de détecteurs de position (PCX) connectés à des servomoteurs respectifs, et un ensemble de compteurs réversibles (CNTX) destinés à compter des impulsions de sortie provenant de détecteurs de position respectifs;

caractérisé en ce que la mémoire (MEM) est également employée pour conserver des données d'ordres numériques pour la commande numérique du positionnement et du mouvement du palpeur (TR) et de la fraise (CT), indépendamment de la commande de copiage;

en ce qu'on peut faire fonctionner le processeur (CPU) pour lire sélectivement des données d'ordres numériques conservées dans la mémoire;

en ce que l'équipement de commande de copiage comprend en outre un registre tampon (BFR) dans lequel des données pour la commande de la direction et de la vitesse du mouvement du palpeur (TR) et de la fraise (CT) sont établies conformément à des données d'ordres numériques lues sélectivement dans la mémoire (MEM), et un convertisseur numérique-analogique (DA), capable de recevoir des données établies dans le registre tampon (BFR) et de fournir à partir d'elles un signal d'ordre de vitesse analogique;

et en ce que les moyens (GC, DRVX) qu'on peut faire fonctionner de façon à appliquer sélectivement le signal d'ordre de vitesse de copiage, comprennent un circuit de porte analogique (GC) qu'on peut commuter sélectivement de façon que le signal d'ordre de vitesse analogique soit appliqué à la place du signal d'ordre de vitesse de copiage, et on peut faire fonctionner le processeur (CPU) de façon à lire les comptes contenus dans les compteurs réversibles (CNTX) pour les comparer à des données d'ordres numériques conservées dans la mèmoire (MEM), pour réaliser ainsi une commande numérique du positionnement et du mouvement du palpeur (TR) et de la fraise (CT).

2. Equipement selon la revendication 1, dans lequel des comptes conservés dans les compteurs réversibles respectifs (CNTX) représentent des changements de position incrémentiels du palpeur (TR) et de la fraise (CT) le long d'axes de mouvement respectifs, et dans lequel on peut faire fonctionner le processeur (CPU) de façon à lire le compte conservé dans chaque compteur réversible, à additionner ce compte à une valeur de comptage accumulée qui est enregistrée dans la mémoire (MEM) en relation avec le compteur réversible concerné, et à mettre à zéro le compteur réversible.

3. Equipement selon la revendication 1, dans lequel les comptes conservés dans les compteurs réversibles (CNTX) représentent la position courant du palpeur (TR) et de la fraise (CT) le long des axes de mouvement respectifs.

4. Equipement selon la revendication 1, 2 ou 3, dans lequel lorsque le positionnement et le mouvement du palpeur (TR) et de la fraise (CT) sont sous commande numérique, on peut faire fonctionner le processeur (CPU) de façon à lire le contenu des compteurs réversibles (CNTX) et à calculer l'information de vitesse réelle, et, lorsque la vitesse réelle ne correspond pas à la vitesse désirée, le processeur peut récrire le contenu du registre tampon (BFR) conformément à des données de correction de vitesse qui sont conservées dans la mémoire (MEM) en tant que données d'ordres numériques.

**Patentansprüche**

1. Kopiersteuerungausrüstung mit einer Einrichtung (ART), die derart betreibbar ist, daß ein Nachlauf-Geschwindigkeitsbefehlssignal für eine Nachlaufsteuerung aus Verschiebesignalen ($\varepsilon_x$, $\varepsilon_y$, $\varepsilon_z$) mittels eines Nachlaufkopfes (TR) während eines Nachlaufvorgangs zum Nachlaufen der Oberfläche eines Modells (MDL) und zum Schneiden eines Werkstücks (W) mittels einer Schneideinrichtung und aus einem bestimmten zusammengesetzten Verschiebesignal ($\varepsilon_o$) gewonnen wird, mit Einrichtungen (GC, DRVX), die so selektive betreibbar sind, daß das Nachlauf-Geschwindigkeitsbefehlssignal für Servomotoren (MX) zur Bewegung des Nachlaufkopfes und der Schneideinrichtung längs entsprechender Bewegungsachsen abgegeben wird,

mit einem Speicher (MEM), der die einen Nachlaufvorgang festlegenden Nachlaufdaten festhält,

mit einem Prozessor (CPU) zum Auslesen der in dem Speicher festgehaltenen Nachlaufdaten zum Zwecke der Steuerung einer Nachlaufbahn des Nachlaufkopfes (TR),

mit einer Vielzahl von Positionsdetektoren (PCX), die

mit entsprechenden Servomotoren gekoppelt sind,

und mit einer Vielzahl von Zweirichtungszählern (CNTX) zum Zählen der Ausgangsimpulse von entsprechenden Positionsdetektoren,

dadurch gekennzeichnet, daß der Speicher (MEM) ferner zum Festhalten von numerischen Befehlsdaten zur von der Nachlaufsteuerung unabhängigen numerischen Steuerung der Positionierung und Bewegung des Nachlaufkopfes (TR) und der Schneideinrichtung (CT) ausgenutzt ist,

daß der Prozessor (CPU) derart selektiv betriebbar ist,

daß die in den Speicher festgehaltenen numerischen Befehlsdaten ausgelesen werden,

daß derner ein Pufferregister (BFR) vorgesehen ist, in das Daten zur Steuerung der Richtung und der Geschwindigkeit der Bewegung des Nachlaufkopfes (TR) und der Schneideinrichtung (CT) in Übereinstimmung mit den aus dem Speicher (MEM) selektiv ausgelesenen numerischen Befehlsdaten eingegeben werden,

daß ein Digital-Analog-Wandler (DA) so betriebbar ist,

daß er die in das Pufferregister (BFR) eingegebenen Daten aufnimmt und aus diesen ein analoges Geschwindigkeits-Befehlssignal bereitstellt,

daß die zur Abgabe des Nachlauf-Geschwindigkeitsbefehlssignals selektiv betreibbaren Einrichtungen (GC, DRVX) eine analoge Torschaltung (aC) enthalten, die selektiv derart schaltbar sind, daß das analoge Geschwindigkeitsbefehlusignal anstelle des Nachlauf-Geschwindigkeitsbefehlssignals abgegeben wird,

und daß der Prozessor (CPU) so betriebbar ist, daß die Zählerinhalte der Zweirichtungszähler (CNTX) für einen Vergleich mit den in dem Speicher (MEM) festgehaltenen numerischen Befehlsdaten ausgelesen werden und dadurch eine numerische Steuerung der Positionierung und Bewegung des Nachlaufkopfes (TR) und der Schneideinrichtung (CT) bewirkt wird.

2. Kopiersteuerungsausrüstung nach Anspruch 1, wobei die in den entsprechenden Zweirichtungszählern (CNTX) festgehaltenen Zählinhalte inkrementale Änderungen der Position des Nachlaufkopfes (TR) und der Schneideinrichtung (CT) längs der entsprechenden Bewegungachsen darstellen,

und wobei der Prozessor (CPU) derart betreibbar ist, daß der in jedem Zweirichtungszähler festgehaltene Zählinhalt ausgelesen wird, daß der Inhalt zu einem in dem Speicher (MEM) bezüglich des betreffenden Zweirichtungszählers gespeicherten akkumulierten Zählwert hinzuaddiert wird und daß der Zweirichtungszähler gelöscht wird.

3. Kopiersteuerungsausrüstung nach Anspruch 1, wobei die in den Zweirichtungszählern (CNTX) festgehaltenen Zählerinhalte die gegenwärtige Position des Nachlaufkopfes (TR) und der Schneideinrichtung (CT) längs der entsprechenden Bewegungsachsen darstellen.

4. Kopiersteuerungsausrüstung nach Anspruch 1, 2 oder 3, wobei in dem Fall, daß die Positionierung und die Bewegung des Nachlaufkopfes (TR) und der Schneideinrichtung (CT) unter numerischer Steuerung erfolgen, der Prozessor (CPU) derart betreibbar ist, daß der Inhalt der Zweirichtungszähler (CNTX) ausgelesen und eine aktuelle Geschwindigkeitsinformation berechnet werden, und daß der Prozessor derart betreibbar ist, daß er in dem Fall, daß die aktuelle Geschwindigkeit einer gewünschten Geschwindigkeit nicht entspricht, den Inhalt des Pufferregisters (BFR) in Übereinstimmung mit den als numerische Befehlsdaten in dem Speicher (MEM) festgehaltenen Geschwindigkeits-Korrekturdaten wieder einschreibt.

TRACER
ARITHMETIC UNIT

$\mathcal{E}x, \mathcal{E}y, \mathcal{E}z$ → ART

ANALOG
GATE CKT

AMPLIFIER

GC → DRVX

DA
CONVERTER   DA

BUFFER
REGISTER   BFR

DATA
OUTPUT UNIT

$\mathcal{E}x, \mathcal{E}y, \mathcal{E}z$   TR

CT

MDL   ST   W

MX   MAC

PCX

TRACING
MACHINE

RST

CNTX

REVERSIBLE
COUNTER

PROCESSOR

CPU

DO

MO   MI   M2

DI   KB

KEYBOARD

MEM
MEMORY

DATA INPUT UNIT

0 038 391